# EUROPÄISCHE PATENTSCHRIFT

(11) **EP 0 963 305 B1**
(45) Veröffentlichungstag und Bekanntmachung des Hinweises auf die Patenterteilung: **29.08.2001**
(21) Anmeldenummer: 98913600.7
(22) Anmeldetag: 26.02.1998
(51) Int. Cl.: B60J 10/12

(54) **GLASVERBUNDELEMENT, INSBESONDERE GLASSCHIEBEDACH FÜR KRAFTFAHRZEUGE**
PANE SETTING ELEMENT, ESPECIALLY GLASS SUN ROOF FOR VEHICLES
ELEMENT DE SOLIDARISATION DE VITRE, ET PLUS PARTICULIEREMENT TOIT OUVRANT EN VERRE POUR VEHICULE

(30) Priorität: 27.02.1997 DE 29703561 U
(43) Veröffentlichungstag der Anmeldung: 15.12.1999
(73) Patentinhaber: Braunsberger, Oskar, 87719 Mindelheim (DE)
(72) Erfinder: Braunsberger, Oskar, 87719 Mindelheim (DE)
(74) Vertreter: Fiener, Josef
(86) Internationale Anmeldenummer: EP9801101
(87) Internationale Veröffentlichungsnummer: WO9838058

(56) Entgegenhaltungen:
- DE-A- 2 127 227
- DE-A- 2 246 913
- US-A- 4 486 256
- US-A- 4 738 482

## Beschreibung

Die Erfindung betrifft ein Glasverbundelement, insbesondere Glasschiebedach für Kraftfahrzeuge, umfassend eine Glastafel, die am Außenrand mit einem Kunststoff-Rahmen umspritzt/umschäumt ist, wobei Halterungsteile miteingeschäumt sind, sowie am Außenumfang des Rahmens eine umlaufende Nut zum Einsetzen einer Dichtung vorgesehen ist.

Derartige Glasverbundelemente, insbesondere Glasschiebedächer (oft auch als Sonnendach bezeichnet) werden in Kraftfahrzeugen zunehmend als Ersatz für Metallschiebedächer eingesetzt, da sie dem Fahrzeuginnenraum eine zusätzliche Transparenz geben. Hierzu ist die Glastafel innerhalb der Dachöffnung so groß wie möglich gewählt. Der die Glastafel umgebende Kunststoff-Rahmen aus einem thermoplastischen Kunststoff oder Polyurethanschaum sollte somit so schlank wie möglich sein. Dieser Kunststoff-Rahmen des Glasschiebedaches (vgl. US-A-4,738,482) dient dabei auch zur Befestigung von Halterungsteilen, beispielsweise Laschen, an denen der Antriebsmechanismus für die Öffnung des Glasschiebedaches angelenkt sind, insbesondere wenn das Glasschiebedach auch als Hebe- oder Aufstelldach ausgebildet ist oder das Glasverbundelement als seitliches Ausstellfenster verwendet wird.

Der Befestigung des Kunststoff-Rahmens an der Glastafel zusammen mit den Halterungsteilen kommt hierbei eine wesentliche Bedeutung zu, da die Glastafel des Glasschiebedaches aus aerodynamischen Gründen bündig mit der Dachfläche sein soll. Somit ist der Kunststoff-Rahmen im wesentlichen nur an der Umlaufkante und einem schmalen Bereich an der Unterseite des Glasschiebedaches vorgesehen. Zudem hat der Kunststoff-Rahmen auch noch die Funktion zur Halterung einer umlaufenden Dichtung, um hier eine sichere und regendichte Abdichtung zu gewährleisten.

Zur zuverlässigen Abdichtung ist hierbei im allgemeinen an dem Kunststoff-Rahmen eine umlaufende Nut vorgesehen, die eine sichere Befestigung der umlaufenden Dichtung gewährleistet. Insbesondere muß ein sicherer Halt der Dichtung sichergestellt werden, um ein Verschieben oder Umklappen der Dichtung zu vermeiden. Hierzu hat sich die T-förmige Ausbildung der umlaufenden Nut als zweckmäßig erwiesen. Jedoch bereitet diese Nut zum Einsetzen einer umlaufenden Dichtung bei der Herstellung erhebliche Probleme. So erfordert diese Ausbildung ein sehr aufwendiges Schäum- oder Umspritzwerkzeug, da an den vier umlaufenden Seiten des Glasschiebedaches vier (oder mehr) Schieber zunächst aus der umspritzten Nut gesondert herausgefahren werden müssen und dann verschwenkt werden, um eine Entnahme des umschäumten bzw. umspritzten Glasschiebedaches zu ermöglichen.

Diese vier (oder mehr) zur Fertigung erforderlichen Schieber zur Ausbildung der umlaufenden Nut stören zudem auch den Schaumlauf des Kunststoffes beim Umspritz- bzw. Umschäumvorgang, so daß häufig eine vollflächige Verbindung zu der Glastafel nicht gewährleistet werden kann. Da jedoch diese Kontaktfläche des Kunststoff-Rahmens mit der Glastafel aufgrund der aerodynamisch erforderlichen Bündigkeit an der Oberseite wesentlich für die Festigkeit des Glasverbundelementes, insbesondere Glasschiebedaches ist, werden die Kontaktflächen häufig überdimensioniert, so daß der Rahmen dann relativ breit ausgelegt werden muß, insbesondere wenn das Glasschiebedach für Kraftfahrzeuge mit hohen Geschwindigkeiten eingesetzt wird, weil bei hohen Geschwindigkeiten erhebliche Kräfte an diesen Kontaktflächen wirken.

Weiterhin ist bei dem bisherigen Herstellungsverfahren mit vier (oder mehr) Schiebern in dem Umschäumwerkzeug der Nachteil einer hohen Taktzeit gegeben, da die vier Schieber bis zur Entnahme des Werkstückes von diesem wegverfahren, hochgeschwenkt und gesäubert werden müssen. Zudem ist die Maßgenauigkeit durch die Vielzahl der Werkzeugteile oft unzureichend, insbesondere da sich durch die Vielzahl der Gleitflächen in dem Werkzeug und den Wärmeanfall bei der Fertigung Verwindungen und somit eine gewisse Maßungenauigkeit ergeben kann. Entsprechendes gilt auch für die Gleitflächen der Schieber des Herstellungswerkzeuges, so daß hierdurch an den Kanten des Kunststoff-Rahmens Grate auftreten können, die ein hohes Maß an Nacharbeit erfordern.

Demzufolge liegt der Erfindung die Aufgabe zugrunde ein Glasverbundelement, insbesondere Glasschiebedach zu schaffen, das die vorstehenden Nachteile vermeidet, insbesondere die Werkzeugkosten und die Taktzeit reduziert, sowie eine höhere Maßgenauigkeit mit verringerten Nachbearbeitungsaufwand bietet.

Diese Aufgabe wird gelöst durch ein Glasverbundelement gemäß den Merkmalen des Anspruches 1.

Durch die Herstellung der umlaufenden Nut nach dem Umspritzvorgang mittels Umrißfräsbearbeitung des Kunststoff-Rahmens kann der Kunststoff-Rahmen für das Umspritzen/Umschäumen in einem einfachen Schäumwerkzeug hergestellt werden. Insbesondere kann hierbei auf die aufwendigen, verschieb- und verschwenkbaren Schieber an den vier Seiten des Werkzeuges für das Glasverbundelement bzw. Glasschiebedach verzichtet werden. Somit ist im wesentlichen das Schäumwerkzeug nur aus dem Werkzeugoberteil und dem Werkzeugunterteil aufgebaut. Dies ermöglicht zudem eine einfachere Anordnung der Auswerfer und der Dichtflächen, so daß eine bessere Abdichtung während der Herstellung erreicht wird. Hierdurch der Nachbearbeitungsaufwand erheblich reduziert. Zudem wird hierdurch ein sehr günstiger Schaumlauf erreicht, so daß eine vollständige Benetzung der Glastafel am unteren Rand erreicht wird. Hierdurch wird die Festigkeit zwischen Glastafel und dem Kunststoff-Rahmen erhöht, bzw. in reproduzierbarer Form sichergestellt, so daß die Qualität des Glasverbundelementes bzw. Glasschiebedaches insgesamt steigt.

Insbesondere wird durch das Umrißfräsen des Rahmens zur Herstellung der umlaufenden, bevorzugt T-förmigen Nut auch sichergestellt, daß die Außenkonturen des Glasschiebedaches exakt eingehalten werden und zudem ein sicherer Sitz für die umlaufende Dichtung gewährleistet wird. Hierbei kann zugleich mit dem Fräsen der Nut auch eine Nachbearbeitung der Außenkontur vorgenommen werden, ebenso eine Entgratung der Außenkanten durch ein Mehrfach-Fräswerkzeug. Insbesondere wird auch durch die Zentrierung bei dem Umrißfräsen, bevorzugt an den Halterungsteilen eine exakte Relativ-Zuordnung zwischen der Dichtungsnut und den Halterungsteilen erreicht, so daß beim Schließen bzw. Öffnen des Glasverbundelementes, insbes. Schiebedaches eine gleichmäßige Dichtungsanlage und somit insgesamt eine bessere Abdichtung der Dachöffnung erreicht wird.

Weitere vorteilhafte Ausgestaltungen sind Gegenstand der Unteransprüche. Insbesondere sei auch darauf hingewiesen, daß bei der bevorzugt verwendeten CNC-Fräsmaschine zum Umrißfräsen der Nut eine einfache Änderung der Dichtungsdimensionen durchführbar ist. Somit kann auf die aufwendige Umgestaltung des Schäumwerkzeuges bei Produktionsänderungen, beispielsweise der Dichtungbreite auf die neuen Maße in einfacher Weise umgestellt werden. Zudem ist hierbei auch eine "gemischte" Fertigung der Glasverbundelemente, insbesondere Glasschiebedächer möglich, so daß unterschiedliche Glasschiebedächer in einer Fertigungslinie produziert werden können. Insbesondere kann auch das zweiteilige Schäumwerkzeug für mehrere Varianten verwendet werden.

Nachfolgend wird ein Ausführungsbeispiel der Erfindung anhand der Zeichnungen näher erläutert und beschrieben. Hierin zeigen:
- Fig. 1: ein Glasverbundelement in der Ausführung als Schiebedach in Einbaustellung in einem Kraftfahrzeug;
- Fig. 2: das Glasschiebedach bei der Herstellung im Schäumwerkzeug; und
- Fig. 3: eine vergrößerte Darstellung des Außenumfangs mit einem schematisch angedeuteten Profilfräser zum Umrißfräsen einer T-förmigen Nut.

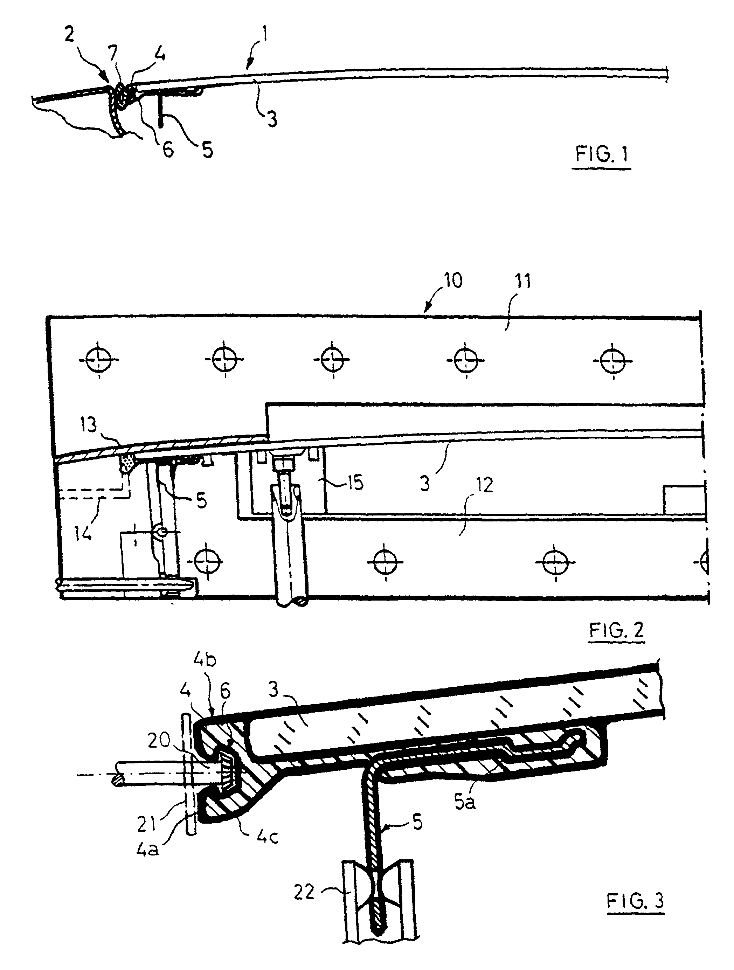

In Fig. 1 ist ein Glasverbundelement 1 in Form eines Glasschiebedaches zum Einbau in einer Dachöffnung 2 eines Kraftfahrzeuges dargestellt. Das Glasschiebedach umfaßt im wesentlichen eine Glastafel 3, die am Außenrand von einem Kunststoff-Rahmen 4 bevorzugt aus PU-Schaumstoff umgeben ist. Dieser Rahmen 4 wird in einem Schäumwerkzeug (vgl. Fig. 2) an dem Außenrand der Glastafel 3 umspritzt bzw. umschäumt. Hierbei werden auch Halterungsteile 5, bevorzugt Winkelbleche 5a mitumspritzt, so daß zum einen die Verwindungsteifigkeit der Glastafel 3 erhöht wird und andererseits eine Befestigung an dem Antriebsmechanismus zum Schieben bzw. Heben des Glasschiebedaches ermöglicht wird.

An der radial nach außen weisenden Kante des Kunststoff-Rahmens 4 ist in der Ebene der Glastafel 3 eine umlaufende, bevorzugt T-förmige Nut 6 zum Einsetzen einer Dichtung 7 vorgesehen. Im Gegensatz zum Stand der Technik wird diese T-förmige Nut 6 erst nach dem Umspritzvorgang, also im ausgehärteten, ggf. getemperten Zustand des Rahmens 4 mittels Umrißfräsen hergestellt, wodurch sich die vorstehend genannten Vorteile, wie Reduzierung der Taktzeit und der Werkzeugkosten sowie eine höhere Maßgenauigkeit ergibt, da hierdurch ein Wärmeverzug der Glastafel 3 ebenfalls ausgeglichen werden kann.

In Fig. 2 ist das Schäumwerkzeug 10 bestehend aus einem Werkzeugoberteil 11 und einem Werkzeugunterteil 12 schematisch dargestellt. Das Schäumwerkzeug 10 kann jedoch auch um 180° gedreht werden, so daß die Glastafel 3 dann konkav positioniert wäre. Wie hieraus ersichtlich ist, ist der Formhohlraum am Außenumfand der Glastafel 3 zur Ausbildung des Rahmens 4 hier punktiert dargestellt und strömungsgünstig geformt, so daß eine sichere Formfüllung erreicht wird.

Dies ist besonders wesentlich, da die Glastafel 3 und die Halterungsteile 5 nur durch die Kontaktfläche zum Rahmen 4 hin befestigt sind. Neben dem vereinfachten Aufbau unter Verzicht von den ansonsten an den Seiten erforderlichen vier (oder mehr) Schiebern für die T-förmige Nut 6 ist zudem der hier punktiert dargestellte Formhohlraum zur Ausbildung des Rahmens 4 besonders günstig abzudichten, bevorzugt mit einer selbsttrennenden Dichtungsplatte 13, die einen Austritt des über eine oder bevorzugt mehrere Einspritzöffnung(-en) 14 eintretenden Kunststoffschaumes an die Oberseite der Glastafel 3 zuverlässig verhindert. Durch diese Dichtungsplatte 13 wird die Oberseite der Glastafel 3 beim Schäumvorgang sauber gehalten, so daß praktisch keine Nacharbeit erforderlich ist.

Zudem ist ersichtlich, daß auch eine sichere Abdichtung zu weiter innen vorgesehenen Auswerfern 15 möglich ist, wodurch somit eine sichere Füllung des Formhohlraums mit Umspritzung der Halterungsteile 5 sichergestellt ist. Weiterhin ist ersichtlich, daß sich das Werkzeugoberteil 11 mit der Dichtungsplatte 13 im wesentlichen kontinuierlich nach außen erstreckt, so daß bei einem gleichbleibenden Werkzeugoberteil 11 verschiedenartige Werkzeugunterteile 12 verwendet werden können. Hierdurch ist beispielsweise auf einer Produktionsanlage mit dem gleichen stempelartigen Werkzeugoberteil 11 eine Fertigung unterschiedlicher Varianten der Glasverbundelemente 1, z. B. Glasschiebedächer mit verschieden positionierten Halterungsteilen 5 möglich. Zudem genügt zur Entnahme des fertiggestellten Glasschiebedaches mit dem Rahmen 4 ein einfaches Anheben des Werkzeugoberteils 11 bzw. ein Absenken des Werkzeugunterteils 12, so daß die Taktzeit wesentlich verringert wird.

In Fig. 3 ist die Fräsbearbeitung der umlaufenden, bevorzugt T-förmigen Nut 6 in dem mit geringen Aufmaß geschäumten Rahmen 4 vergrößert dargestellt. Es sei jedoch darauf hingewiesen, daß die Nut 6 auch im wesentlichen flach und parallel zur Ebene der Glastafel 3 ausgebildet sein kann, wobei dann eine Dichtung 7 mit einer Vielzahl von grätenförmigen Rasthaken Verwendung findet. Bei einer T-förmigen Nut 6 wird ein relativ durchmesserkleiner Profilfräser 20 verwendet, mit dem durch Axialvorschub entlang seiner Drehachse zunächst die Verbindung zur T-förmigen Nut 6 hin geschaffen wird. Durch Verfahren des Profilfräsers 20 entlang dem Umriß des Rahmens 4 (hier senkrecht zur Zeichenebene), wird dann die T-förmige Nut 6 mittels Umrißfräsen hergestellt. Nach einem vollständigen Umlauf des Profilfräsers 20 wird dieser aus der T-förmigen Nut 6 des Rahmens 4 an der Eintrittsstelle herausverfahren. Dabei kann zum Entgraten und Maßbearbeiten der äußeren Stirnseite 4a des Kunststoff-Rahmens 4 auch ein scheibenförmiges Entgratwerkzeug vorgesehen sein, wie dies mit dem scheibenförmigen Stirnfräser 21 angedeutet ist. Es sei jedoch darauf hingewiesen, daß als Fräswerkzeug auch ein Fräser mit bei höheren Drehzahlen ausklappbaren Schneiden verwendet werden kann oder bei einer flachen Schlitzausführung der Nut 6 ein Scheibenfräser mit senkrechter Drehachse, wobei der Einstich-Vorschub in das Kunststoffmaterial des Kunststoff-Rahmens 4 in etwa parallel zur Glastafel 3 erfolgt.

Die Glastafel 3 und der damit verbundene Kunststoff-Rahmen 4 wird zum Umrißfräsen bevorzugt in einem nicht dargestellten (da an sich bekannten) Vakuumtisch zentriert aufgenommen. Ergänzend oder alternativ kann die Halterung beim Umrißfräsen des Glasschiebedaches bzw. dessen umlaufenden Kunststoff-Rahmens 4 auch an den Halterungsteilen 5 erfolgen. Hierzu ist eine Halterungsklammer 22 dargestellt, die beispielsweise in eine Bohrung oder Ausstanzung des Winkelblechs 5a eingreift. Neben der Fixierung wird somit zugleich das Glasschiebedach indexiert und somit eine Relativ-Zuordnung zu dem Fräswerkzeug 20 und ggf. auch 21 geschaffen.

Das Umrißfräsen der Nut 6 erfolgt hierbei bevorzugt mit einer CNC-Fräsmaschine oder einer Kopier-Fräsmaschine. Eventuelle Änderungen in der Dimensionierung der Nut 6 zur Anpassung beispielsweise an eine geänderte Geometrie der Dichtung 7 kann somit besonders schnell durch einfache Programmänderung erfolgen. Neben der Fixierung/Indexierung kann die Außenkontur des im Werkzeug 10 hergestellten Glasverbundelementes 1 auch mit einer gesonderten, nicht dargestellten Meßvorrichtung erfolgen. Beispielsweise können hierzu an den Halterungsteilen 5 Meßtaster angreifen, so daß auch hier wiederum die Relativ-Zuordnung zu dem entlang der Außenkontur verfahrenden Profilfräser 20 geschaffen wird. Hierdurch lassen sich ebenfalls geringfügige Toleranzen, z.B. durch Wärmeverzug bei der Fertigung besonders gut ausgleichen, da das Umrißfräsen und die Maßaufnahme im erkalteten Zustand des Rahmens 4 erfolgt, so daß insgesamt eine exakte Zuordnung zwischen den Halterungsteilen 5 und der umlaufenden Nut 6 für die Dichtung 7 geschaffen wird. Hierdurch wird insgesamt die Abdichtung beim Einbau in das Kraftfahrzeug z.B. gegenüber der Dachöffnung 2 wesentlich verbessert, da eine gleichmäßige Dichtungsanlage sichergestellt ist.

## Patentansprüche

1. Glasverbundelement, insbesondere Glasschiebedach für Kraftfahrzeuge, umfassend eine Glastafel (3), die am Außenrand mit einem Kunststoff-Rahmen (4) umspritzt/umschäumt ist, wobei Halterungsteile (5) mitumschäumt sind, sowie am Außenumfang des Rahmens eine umlaufende Nut (6) zum Einsetzen einer Dichtung vorgesehen ist,
**dadurch gekennzeichnet**, daß
die Nut (6) nach dem Umschäumvorgang in dem Kunststoff-Rahmen (4) mittels Umrißfräsen hergestellt ist.

2. Glasverbundelement nach Anspruch 1,
**dadurch gekennzeichnet**, daß
die Oberseite (4b) des Kunststoff-Rahmens (4) bündig mit der Glastafel (3) ist.

3. Glasverbundelement nach Anspruch 1 oder 2,
**dadurch gekennzeichnet**, daß
die Glastafel (3) zusammen mit dem Kunststoff-Rahmen (4) zum Umrißfräsen in einem Vakuumtisch oder Aufspannvorrichtung zentriert aufgenommen ist.

4. Glasverbundelement nach einem der Ansprüche 1 bis 3,
**dadurch gekennzeichnet**, daß
beim Umrißfräsen das Glasverbundelement (1) an den Halterungsteilen (5) indexiert und/oder fixiert ist.

5. Glasverbundelement nach einem der Ansprüche 1 bis 4,
**dadurch gekennzeichnet**, daß
die Halterungsteile (5) durch Winkelbleche (5a) gebildet sind, die vom Kunststoff-Rahmen (4) vollständig abgedeckt sind.

6. Glasverbundelement nach einem der Ansprüche 3 bis 5,
**dadurch gekennzeichnet**, daß
die Zentrierung des Glasverbundelementes (1) zum Umrißfräsen mittels einer gesonderten Meßvorrichtung, insbesondere Meßtastern an den Halterungsteilen (5) erfolgt.

7. Glasverbundelement nach einem der Ansprüche 1 bis 6,
**dadurch gekennzeichnet**, daß
zum Umrißfräsen der Nut (6) des Glasverbundelementes (1) eine CNC-Fräsmaschine vorgesehen ist.

8. Glasverbundelement nach einem der Ansprüche 1 bis 6,
**dadurch gekennzeichnet**, daß
zum Umrißfräsen der Nut (6) des Glasverbundelementes (1) eine Kopier-Fräsmaschine vorgesehen ist.

9. Glasverbundelement nach einem der Ansprüche 1 bis 8,
**dadurch gekennzeichnet**, daß
die Umrißkante (4a) und/oder Unterkante (4c) des Kunststoff-Rahmens (4) beim Umrißfräsen der Nut (6) in einem Arbeitsgang mitbearbeitet wird.

10. Glasverbundelement nach einem der Ansprüche 1 bis 9,
**dadurch gekennzeichnet**, daß
beim Umrißfräsen der Nut (6) eine Entgratbearbeitung für die Umrißflächen (4a, 4b, 4c) des Kunststoff-Rahmens (4) vorgesehen ist.

11. Glasverbundelement nach einem der Ansprüche 1 bis 10,
**dadurch gekennzeichnet**, daß
zwischen Werkzeugoberteil (11) und Werkzeugunterteil (12) eine Dichtungsplatte (13) eingefügt ist, die im wesentlichen die Bombierung der gegenseitigen Anlagefläche an der Glastafel (3) nach außen hin fortsetzt.

12. Verfahren zum Herstellen eines Glasverbundelements, insbesondere Glasschiebedach für Kraftfahrzeuge, umfassend eine Glastafel (3), die am Außenrand mit einem Kunststoff-Rahmen (4) umspritzt/umschäumt ist, wobei Halterungsteile (5) mitumschäumt sind,
**dadurch gekennzeichnet**, daß
der Außenumfang des Rahmens (4) nach dem Umschäumvorgang zur Aufnahme einer umlaufenden Dichtung (7) durch Umrißfräsen bearbeitet wird.

## Claims

1. Pane setting element, especially a glass sun roof for motor vehicles, comprising a glass panel (3), which is injection/foam moulded at the outer edge with a plastic framing (4), wherein holding members (5) are foam moulded in, as well as a surrounding groove (6) is provided at the outer periphery of the frame for inserting a seal,
**characterized in that**
the groove (6) is produced in the plastic framing (4) after the foam moulding operation by means of contour milling.

2. Pane setting element according to claim 1, **characterized in that** the upper side (4b) of the plastic framing (4) is flush with the glass panel (3).

3. Pane setting element according to claim 1 or 2,
**characterized in that** the glass panel (3) together with the plastic framing (4) is received centred in a vacuum table or clamp device for the contour milling.

4. Pane setting element according to any of claims 1 to 3,
**characterized in that** the pane setting element (1) is indexed and/or fixed on the holding members (5) during the contour milling.

5. Pane setting element according to any of claims 1 to 4,
**characterized in that** the holding members (5) are formed by angle irons (5a) which are completely covered by the plastic framing (4).

6. Pane setting element according to any of claims 3 to 5,
**characterized in that** the centring of the pane setting element (1) for the contour milling is effected by means of a separate measuring device, especially measuring sensors on the holding members (5).

7. Pane setting element according to any of claims 1 to 6,
**characterized in that** a CNC milling machine is provided for the contour milling of the groove (6) of the pane setting element (1).

8. Pane setting element according to any of claims 1 to 6,
**characterized in that** a copier milling machine is provided for the contour milling of the groove (6) of the pane setting element (1).

9. Pane setting element according to any of claims 1 to 8,
**characterized in that** the peripheral edge (4a) and/or the lower edge (4c) of the plastic framing (4) is/are machined together with the contour milling of the groove (6) in one operating step.

10. Pane setting element according to any of claims 1 to 9,
**characterized in that** a flash removal operation for the peripheral surfaces (4a, 4b, 4c) of the plastic framing (4) is provided in the contour milling of the groove (6).

11. Pane setting element according to any of claims 1 to 10,
**characterized in that** a sealing plate (13) is inserted between the tool upper part (11) and the tool lower part (12) so as essentially to continue outwardly the bowing of the opposite abutment surfaces on the glass panel (3).

12. A method of making a pane setting element, especially a glass sun roof for motor vehicles, comprising a glass panel (3), which is injection/foam moulded at the outer edge with a plastic framing (4), wherein holding members (5) are foam moulded in,
**characterized in that**
the outer periphery of the frame (4) is machined by contour milling after the foam moulding operation to receive a surrounding seal (7).

## Revendications

1. Elément de solidarisation de vitre, notamment toit ouvrant en verre pour véhicules, comprenant un panneau de verre (3) qui est entouré par extrusion/expansion par un cadre de plastique (4) sur le bord extérieur, des pièces de support (5) étant expansées simultanément, et une rainure continue (6) étant prévue sur le pourtour extérieur du cadre pour l'insertion d'un joint, **caractérisé en ce que** la rainure (6) est réalisée dans le cadre de plastique (4) après le procédé d'expansion par fraisage par contournage.

2. Elément de solidarisation de vitre selon la revendication 1, **caractérisé en ce que** le côté supérieur (4b) du cadre de plastique (4) est au même niveau que le panneau de verre (3).

3. Elément de solidarisation de vitre selon la revendication 1 ou 2, **caractérisé en ce que** le panneau de verre (3) est logé avec le cadre de plastique (4) de façon centrée dans une table sous vide ou dans un dispositif de blocage pour le fraisage par contournage.

4. Elément de solidarisation de vitre selon l'une des revendications 1 à 3, **caractérisé en ce que** l'élément de solidarisation de vitre (1) est indexé et/ou fixé sur les pièces de support (5) lors du fraisage par contournage.

5. Elément de solidarisation de vitre selon l'une des revendications 1 à 4, **caractérisé en ce que** les pièces de support (5) sont formées par des tôles angulaires (5) recouvertes entièrement par le cadre de plastique (4).

6. Elément de solidarisation de vitre selon l'une des revendications 3 à 5, **caractérisé en ce que** le centrage de l'élément de solidarisation de vitre (1) s'effectue pour le fraisage par contournage au moyen d'un dispositif de mesure spécial, notamment au moyen de palpeurs de mesure placés sur les pièces de support (5).

7. Elément de solidarisation de vitre selon l'une des revendications 1 à 6, **caractérisé en ce qu**'une fraiseuse à commande numérique par calculateur est prévue pour le fraisage par contournage de la rainure (6) de l'élément de solidarisation de vitre (1).

8. Elément de solidarisation de vitre selon l'une des revendications 1 à 6, **caractérisé en ce qu**'une fraiseuse de copiage est prévue pour le fraisage par contournage de la rainure (6) de l'élément de solidarisation de vitre (1).

9. Elément de solidarisation de vitre selon l'une des revendications 1 à 8, **caractérisé en ce que** le bord de contour (4a) et/ou le bord inférieur (4c) du cadre de plastique (4) est usiné en une étape de travail lors du fraisage par contournage de la rainure (6).

10. Elément de solidarisation de vitre selon l'une des revendications 1 à 9, **caractérisé en ce qu**'un usinage par ébarbage est prévu pour les surfaces de contour (4a, 4b, 4c) du cadre de plastique (4) lors du fraisage par contournage de la rainure (6).

11. Elément de solidarisation de vitre selon l'une des revendications 1 à 10, **caractérisé en ce qu**'une plaque d'étanchéité (13) est insérée entre la pièce supérieure d'outil (11) et la pièce inférieure d'outil (12), plaque qui prolonge essentiellement le bombage de la surface d'appui mutuelle sur le panneau de verre (3) vers l'extérieur.

12. Procédé pour la fabrication d'un élément de solidarisation de vitre, notamment un toit ouvrant en verre pour véhicules, comprenant un panneau de verre (3) qui est entouré par extrusion/expansion par un cadre en plastique sur le bord extérieur, des pièces de support (5) étant expansées simultanément, **caractérisé en ce que** le contour extérieur du cadre (4) est usiné par fraisage par contournage après l'opération d'expansion pour le logement d'un joint (7) continu.
